# EUROPEAN PATENT SPECIFICATION

(11) **EP 1 519 057 B1**
(45) Date of publication and mention of the grant of the patent: **26.12.2012**
(21) Application number: 04104567.5
(22) Date of filing: 21.09.2004
(51) Int. Cl.: F16B 7/04, F16B 2/04

(54) **Fastening device**
Befestigungsvorrichtung
Dispositif de fixation

(30) Priority: 25.09.2003 SE 0302547
(43) Date of publication of application: 30.03.2005
(73) Proprietor: Scania CV AB (publ), 151 87 Södertälje (SE)
(72) Inventor: Pettersson, Emil, 117 31 Stockholm (SE)
(74) Representative: Sjögren Paulsson, Stina

(56) References cited:
- EP-A- 1 097 829
- US-A- 4 112 815
- US-A- 5 228 816

## Description

### FIELD OF THE INVENTION AND STATE OF THE ART

The present invention relates to a device for fastening electronic control units to an element in a vehicle which element, for fastening purposes only, has a hole in a surface according to the preamble of the attached claim 1.

Such a device is in principle applicable where there is shortage of space so that it is difficult to fasten the electronic control units to the element by conventional means, e.g. by threaded connection or the like. An example which may be mentioned is the arranging of electronic control units within the instrument panel of a vehicle by fastening them relative to loadbearing elements, such as frame members, of the vehicle chassis, but other examples are also conceivable.

A device of this kind makes it possible by relatively easy manipulation to fasten said parts, and hence electronic control units, to an element which element, for fastening purposes only, has a hole in a surface.

Devices of this kind are previously known, e.g. from DE 360 2686 and EP 1 103 731. The latter specification describes a device for fastening to a panel with at least one hole. Part of that device takes the form of an arm with a protrusion which is pivotable relative to an item which is itself provided with a fixed protrusion, in order to bring it into an active fastening position after the insertion of the protrusion through the hole in question. A disadvantage of that device is that the protrusion does not result in the device being held firmly enough in the active fastening position for it to be suitable, for example, for arranging as a bracket in a motor vehicle, a situation in which vibrations occur.

US 4.112. 815 shows a device for fastening an object to an element and when you use it, the protrusions, which then are close to another, are inserted in the hole. When they are pivoted they part and the object is fastened by the parted protrusions. The device has resilient wing members that abut the opposite side of the element (or the object if it is a panel).

US 5.228.816 shows a device where the protrusions, which then are close to another, are inserted in the hole. When they are pivoted they part and two stem halves are closed whereby means abut the opposite side of the element. The stem halves are mutually locked, which causes the device to fasten to the element. The locked together stems are then inserted in a hole in the object to be fastened to the element.

### SUMMARY OF THE INVENTION

The object of the present invention is to provide a device of the kind defined in the introduction which makes it possible to achieve by simple means a reliable and firm locking of said two parts to a said element in the active fastening position.

This object is achieved according to the invention by providing a device according to the attached claim 1.

The arranging of said thickened ends on the protrusion and the provision according to the invention, on both parts, of abutment means which, when the parts are pivoted relative to one another towards the active fastening position, will cause abutment against the element's surface surrounding the hole, and which will increasingly press the thickened ends against said other surfaces of the element, results in the parts, and hence the electronic control units, in the active fastening position, being held firmly clamped to the element. This makes it possible to use such a device for fastening electronic control units even to elements which are subject to vibration or the influence of other extraneous forces, e.g. inertia forces.

It should be noted that "thickened ends with a larger cross-section than projecting portions adjacent to them" is to be construed broadly and means that at the ends the protrusions are broadened in some way and the actual material element of the protrusions might even at the ends have a smaller cross-section than said projecting portions and might for example take the form of claws or the like extending partly in a transverse direction. In such a case the internal hollow space that the respective end is defining, is counted in the latter's cross-section. According to a preferred embodiment of the invention, the abutment means of the respective parts are so arranged that in said active fastening position they abut against and act upon surface portions of said element which are situated in the transverse direction of the hole on the opposite side of the hole from the surfaces which the protrusion belonging to the part concerned is intended to grip from behind. This means that the electronic control units can be clamped even more securely in position relative to the element.

According to another preferred embodiment of the invention, the abutment means of the respective parts are so arranged with abutment surfaces arranged for abutment against the first-mentioned surface in the rotational direction of the part concerned relative to the other part about the parts' common pivot axis from the inactive towards the active fastening position less than 90° after the protrusion belonging to the part concerned. This enables a transition from the first inactive rotational position to the active fastening position for secure fastening by relatively slight mutual pivoting of the parts, which is of advantage in cases where the space available is limited. It is also advantageous if the abutment means and the protrusion of the respective part are arranged with abutment means having their abutment surfaces intended for abutment against the first-mentioned surfaces oriented in substantially the same direction as the protrusion in both the inactive and the active fastening positions.

According to another embodiment of the invention, the thickened ends of the protrusions each take the form of a step with step surfaces which extend substantially perpendicularly to the longitudinal direction of the protrusion and which connect the thickened ends to projecting portions adjacent thereto, and the locking means is arranged to lock the parts firmly in an active fastening position in which said step surfaces are pressed against said other surfaces surrounding the hole. The presence of such a step contributes to the possibility of firm clamping of the parts, and hence the electronic, control units, to the element. The same also applies in cases where the protrusions have their projecting portions provided with an outer contour substantially corresponding to the contours of the hole in which they are intended to be inserted so as to be substantially adjacent thereto in said active fastening position.

According to another embodiment of the invention, the locking means comprise at least one engagement means of the one part so arranged that, when the parts are mutually pivoted from the inactive position to the active fastening position by the pivoting movement, it is brought into locking engagement with an engagement means of the other part. This makes locking very easy and quick to effect. The same applies *mutatis mutandis* to removing the electronic control units from the element, e.g. for maintenance, repair or replacement, whereby said engagement means are arranged to be mutually disengageable in said active fastening position by applying to at least one of the parts external forces which partly deform at least one of the parts.

According to another embodiment of the invention, the configuration of the parts is such that in said active fastening position they extend substantially further away from said element than the protrusions are long, preferably at least three times as far as the length of the protrusions, and the locking means are each arranged at an end of the respective part which is remote from the protrusions. This is particularly advantageous with a configuration of the locking means with engagement means brought into engagement by mutual rotation of the parts, since the great distance makes it easier to implement this embodiment of the invention.

According to another embodiment of the invention, the respective parts each take the form of a single piece, rendering the device reliable and easy to manufacture. In this case it is advantageous that the parts be made of a rigid material with a certain slight elasticity, such as certain plastics, polyamide being a suitable example. This makes it possible to manufacture the device by continuous moulding of the two parts. It also is claimed to form the pivotable connection by one of the parts having an open groove with a partly circular cross-section and the other part having ridgelike portions insertable therein whose cross-section corresponds to a cross-section of the groove. The invention also relates to an application of a device according to the invention for fastening of electronic control units to elements in the form of loadbearing elements, such as chassis frame members, of a vehicle. The invention particularly relates to such applications at points in a vehicle, e.g. within an instrument panel, where little space is available. In such cases, the device is used with advantage for fastening electronic control units to such a loadbearing element.

Further advantages and advantageous features of the invention are indicated by the ensuing description and other dependent claims.

### BRIEF DESCRIPTION OF THE DRAWING

An embodiment of the device according to the invention is described below by way of example with reference to the attached drawing, in which:
Fig. 1 is a perspective view of a device according to an embodiment of the invention in an inactive state for insertion of a protrusion which forms part of it in a hole in a loadbearing element in the form of a frame member of a vehicle,
Fig. 2 is a view corresponding to Fig. 1 of the device in a position for active fastening to the loadbearing element, and
Fig. 3 is a partly cutaway sideview of the device according to Figs. 1 and 2 in the active fastening position according to Fig. 2.

### DETAILED DESCRIPTION OF AN EMBODIMENT OF THE INVENTION

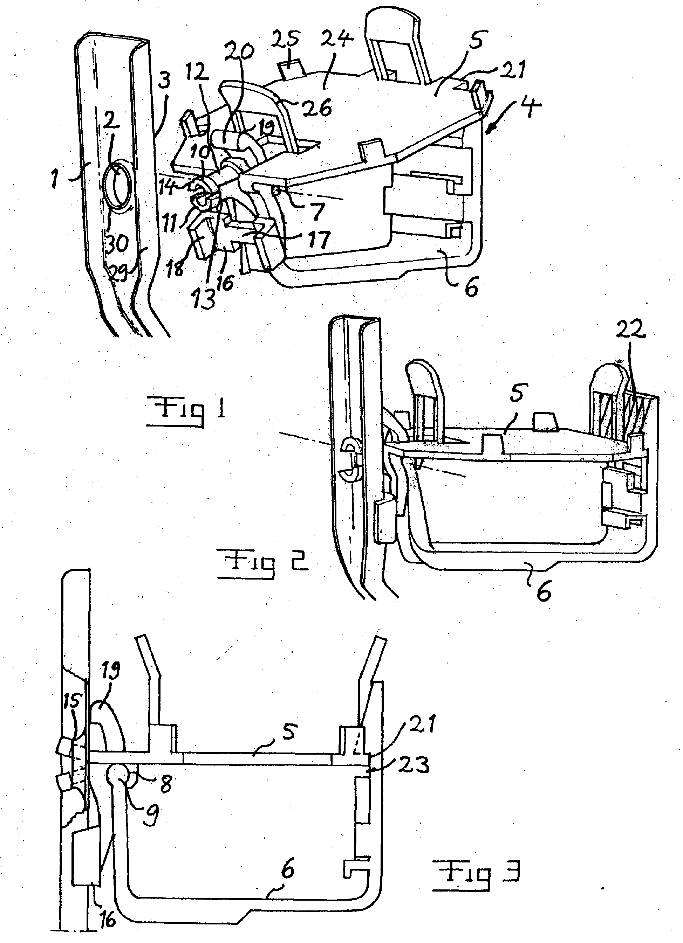

Fig. 1 illustrates a device for fastening an object to an element 1 (here in the form of a frame member of a vehicle chassis) which, for fastening purposes only, has a hole 2 in a surface 3. In this case the intention is that the device 4 depicted to the right of the element 1 in Fig. 1 is to serve as a bracket and that objects in question in the form of electronic control units are to be arranged on constituent parts of it so that they are fastened via the device relative to the element 1. The device comprises two parts 5, 6, each of them moulded in the form of a single piece of a rigid material with a certain slight elasticity, preferably polyamide. The parts 5, 6 are mutually connected for pivoting about a pivot pin 7 by the one part 5 having an open groove 8 (see also Fig. 3) with a partly circular cross-section and the other part 6 having ridgelike portions 9 which can be snapped into said groove and which have a cross-section which corresponds to a cross-section of said groove. The part 5 has a protrusion 10 and the part 6 a protrusion 11. The protrusions 10, 11 are so arranged that in the position according to Fig. 1 corresponding to a first inactive rotational position of the parts they are sufficiently close to one another to allow them to be inserted together in the hole 2. Each protrusion also has projecting portions 12 with an outer contour substantially corresponding to the contours of the hole 2 in which they are intended to be inserted, and an end portion 14 which is thickened by a step 13. The step has step surfaces 15 extending substantially perpendicularly to the longitudinal direction of the protrusion.

Each part 5, 6 also has a means so arranged that when the parts are pivoted in order to part them in a hole, the protrusions will abut against the surfaces 3 which surround the hole. More specifically, the part 5 has such an abutment means 16 with two planar surfaces 17 for abutment against the surfaces 3 surrounding the hole, and has flange portions 18, which are perpendicular to said means, for gripping the flanges 29 of the element 1 in order to stabilise the device.

In a corresponding manner, the part 6 has an abutment means 19 with some rounded abutment surfaces 20.

The function of the device according to the invention will now be explained with simultaneous reference to Figs. 1-3 and with description of further features of the device, such as means for mutual locking of the parts 5, 6. When the device is to be fastened to an element 1, the two parts 5, 6 are held in an inactive rotational position (Fig. 1) in which the protrusions 10, 11 are close enough together to allow them to be inserted through the hole 2. When this has been done, the two parts are mutually pivoted about the pivot pin 7 in a direction parting the protrusions. The result is that the protrusions come to abut, via their portions 12, against the inside walls of the hole and have their end portions 14 behind surfaces 30 surrounding the hole, in this case a pressed-out edge of the hole.

The abutment means 16, 19 of the respective parts 5, 6 are so arranged that such pivoting results in their abutting against and acting upon surface portions of the element 1 which are in the transverse direction of the hole on the opposite side of the hole from the surfaces which the protrusion belonging to the part concerned is intended to abut against. At the same time, the respective abutment means and protrusions are so arranged on the respective parts that when the parts are mutually pivoted from the inactive insertion position according to Fig. 1 they will move in the opposite direction to the direction of insertion of the protrusions into the hole. This means that at the time of such pivoting the protrusions will tend to move out of the hole, while the abutment means will move towards the surfaces 3 surrounding the hole. The result is that the respective protrusions will come to abut, via their step surfaces 15, against the surfaces 30 surrounding the hole and that the abutment means with surfaces 17 and 20 respectively will come to abut against the surfaces 3 surrounding the hole which are arranged on the opposite side of the element. Continued pivoting of the parts about the pin 7 will result in the abutment means applying, via their abutment surfaces, an increasing pressure force against the surfaces 3 of the element and the step surfaces 15 of the protrusions so that an increasing force is exerted on the surfaces 30, while the projecting portions 12 are pressed against the inside walls of the hole.

The parts 5, 6 have means for their mutual locking. More specifically, the part 5 has two male engagement means 21 in the form of protruding portions arranged so that during the pivoting movement they slide on ramplike portions 22 of the part 6 in order, when they reach a fastening position (Fig. 2 and Fig. 3), to snap into a female engagement means 23 in the form of a recess in the part 6.

In the device's active fastening position as defined by the locking means 21, 23, the device will be very firmly clamped to the element 1 which has the hole in it. The parts 5, 6 being made of a material with slight elasticity, such as polyamide, will make the fastening position easy to reach by the protruding portions 21 acting upon the ramp portions 22 to deform the part 6 somewhat as they slide on said portions 22. Correspondingly, the device can easily be removed by the part 6 (in the fastening position according to Figs. 2 and 3) being deformed somewhat by bending it on the ramp portions 22, to the right as seen in Fig. 3, so that the protruding portions 21 can leave the recess 23 and the part can be pivoted freely to the mutual position depicted in Fig. 1 and the device can then be withdrawn from the hole. This is facilitated by the configuration of the two parts 5 and 6 being such that in the active fastening position they extend substantially further away from the element 1 than the length of the protrusions, more specifically the leverage becomes relatively great upon the application of deforming forces to the end of the part 6 where the ramp portions 22 are situated, during locking and bolting of the device.

The part 5 has a large loadbearing surface 24 to which two electronic control units are intended to be secured, inter alia by means of various tabs 25 and other supporting means 26. The device is intended to be arranged within the instrument panel (e.g. between a storage compartment and a radio set) of a vehicle, particularly a major-road motor vehicle such as a truck or a car.

The invention is of course in no way limited to the embodiment described above, since a multiplicity of possibilities for modifications of it are likely to be obvious to a specialist in the field without having to deviate from the basic concept of the invention as defined in the attached claims.

For example, the appearance of the two parts might be completely different despite the device still functioning according to the same principles.

The appearance of the abutment means might, for example, be completely different and the electronic control units be directly integrated with one or both of the parts.

## Claims

1. A device for fastening electronic control units to an element (1) in a vehicle which element, for fastening purposes only, has a hole (2) in a surface (3), whereby the device comprises two parts (5, 6) connected for pivoting relative to one another, each of which has a protrusion (10, 11) so arranged that in use, in a first inactive rotational position of the parts the protrusions are close enough to one another to allow them to be inserted together in the hole and that when the protrusions are mutually pivoted to an active fastening position they are parted and grip from behind other surfaces (30) surrounding the hole on the side of the hole opposite the first-mentioned surface, whereby the units are intended to form part of or be arranged on one or both of the parts, and whereby the protrusions have thickened ends (14) with a larger cross-section than projecting portions (12) adjacent to them, and that each part has a means (16, 19) so arranged that, when the parts (5, 6) are pivoted from the inactive position towards the active fastening position, said means moves, with respect to the insertion direction of the protrusions in said hole, in the direction opposite to the protrusions (10, 11) in order to abut against the first-mentioned surface (3) surrounding the hole on opposite sides of the hole **characterised in that** one of the parts (5) has a large load bearing surface (24) to which two electronic control units are intended to be secured, and **in that** the device comprises means (21, 23) for mutual locking of the two parts in said active fastening position, **in that** said pivotable connection is formed by one (5) of the parts having an open groove (8) with a partly circular cross-section and the other part (6) having ridgelike portions (9) which can be snapped into said groove and have a cross-section corresponding to a cross-section of the groove and **in that** said abutment means (16, 9) to abut against the first-mentioned surface upon continued pivoting, presses against that s ace and acts upon the protrusions in the direction outwards from the hole while they are pushed apart and their thickened ends are pressed against the other surfaces (30) surrounding the hole while the projecting portions (12) are pressed against the inside walls of the hole so that via the locking means (21, 23) they are thus locked firmly in the active fastening position.

2. A device according to claim 1, **characterised in that** the abutment means (16, 19) of the respective parts (5, 6) are so arranged that in use in said active fastening position they abut against and act upon surface portions of said element which are situated in the transverse direction of the hole on the side of the hole opposite the surfaces which the protrusion (10, 11) belonging to the part concerned is intended to grip from behind.

3. A device according to claim 1 or 2, **characterised in that** the abutment means (16, 19) of the respective parts (5, 6) are arranged with abutment surfaces (17, 20) arranged for abutment against the first-mentioned surface (3).

4. A device according to any one of the foregoing claims, **characterised in that** the thickened ends (14) of the protrusions each take the form of a step (13) with step surfaces (15) which extend substantially perpendicularly to the longitudinal direction of the protrusion and which connect the thickened ends to projecting portions (12) adjacent thereto, and that the locking means (21, 23) are arranged to lock the parts (5, 6) firmly in use in an active fastening position in which said step surfaces are pressed against said other surfaces surrounding the hole.

5. A device according to any one of the foregoing claims, **characterised in that** the locking means (21, 23) comprise at least one engagement means (21) of the one part so arranged that, when the parts are mutually pivoted from the inactive position to the active fastening position by the pivoting movement, it is brought into locking engagement with an engagement means (23) of the other part.

6. A device according to claim 5, **characterised in that** said engagement means (21, 23) are so arranged as to allow them to be brought out of the mutual engagement in said active fastening position by applying to at least one of the parts external forces which partly deform at least one of the parts (6).

7. A device according to any one of the foregoing claims, **characterised in that** the configuration of the portion of the parts (5, 6) that does not constitute the protrusions (10, 11) is such that in said active fastening position said portions extend substantially further away from said element (1) than the protrusions (10, 11) are long, preferably at least three times as far as the length of the protrusions, and that the locking means (21, 23) are each arranged at an end of the respective part which is remote from the protrusions.

8. An application of the device according to any one of the foregoing claims for fastening of objects to elements in the form of loadbearing elements (1), e.g. chassis frame members, of a vehicle.

9. An application according to claim 8, whereby the electronic control units are fastened to loadbearing elements of a vehicle by arranging them on one or both of said parts.

10. An application according to claim 9, whereby electronic control units are fastened within the instrument panel of a vehicle.

## Patentansprüche

1. Vorrichtung zum Befestigen von elektronischen Steuereinheiten an einem Element in einem Fahrzeug, wobei das Element nur für den Zweck der Befestigung eine Öffnung (2) in einer Fläche (3) aufweist, wobei die Vorrichtung (2) relativ zueinander schwenkbar verbundene Teile (5, 6) aufweist, von denen jedes einen Vorsprung (10, 11) umfasst, der derart angeordnet ist, dass bei der Verwendung in einer ersten inaktiven rotatorischen Position der Teile die Vorsprünge nahe genug beieinander liegen, sodass sie zusammen in die Öffnung einführbar sind, und wenn die Vorsprünge gemeinsam in eine aktive Befestigungsposition geschwenkt werden, sie geteilt sind und andere Flächen (30) hintergreifen, die die Öffnung an der der erstgenannten Fläche entgegengesetzten Seite der Öffnung umgeben, wobei die Einheiten dazu ausgebildet sind, ein Bestandteil der Teile oder an einem oder beiden der Teile angeordnet zu sein, und wobei die Vorsprünge verdickte Enden (14) mit einem größeren Querschnitt als die zu ihnen benachbarten Vorsprungsabschnitten (12) aufweisen, und jedes Teil ein Mittel (16, 19) umfasst, das derart angeordnet ist, dass dann, wenn die Teile (5, 6) von ihrer inaktiven Position in Richtung ihrer aktiven Befestigungsposition geschwenkt werden, die Mittel sich bezüglich der Einführrichtung der Vorsprünge in die Öffnung in die den Vorsprüngen (10,11) entgegengesetzte Richtung bewegen, um an der erstgenannten Fläche (3) in Anlage zu gelangen, die die Öffnung an den gegenüberliegenden Seiten der Öffnung umgibt, **dadurch gekennzeichnet, dass** eines der Teile (5) eine größere Lastauflagefläche (24) aufweist, an der zwei elektronische Steuereinheiten befestigbar sind, und dass die Vorrichtung Mittel (21, 23) zum beidseitigen Verriegeln der beiden Teile in der aktiven Befestigungsposition aufweist, und dass die verschwenkbare Verbindung mittels einer offenen Nut (8)), die einen teilweise kreisförmigen Querschnitt aufweist, an einem der Teile (5) und einem kantenförmigen Abschnitt (9) an dem anderen Teil (6) gebildet wird, wobei der kantenförmige Abschnitt in die Nut einrastbar ist und einen Querschnitt aufweist, der korrespondierend zu dem Querschnitt der Nut ausgebildet ist, und dass die Anlagemittel (16, 19) zum Anlegen an der erstgenannten Fläche nach einer kontinuierlichen Schwenkbewegung gegen diese Fläche drücken und auf die Vorsprünge in einer Richtung auswärts der Öffnung wirken, während die Vorsprünge auseinandergedrückt werden und ihre verdickten Enden gegen die anderen Flächen (30) gedrückt werden, die die Öffnung umgeben, wobei die Vorsprungsabschnitte (12) derart gegen die Innenwände der Öffnung gedrückt werden, dass sie mittels des Verriegelungsmittels (21, 23) fest in ihrer aktiven Befestigungspositionen verriegelbar sind.

2. Vorrichtung nach Anspruch 1, **dadurch gekennzeichnet, dass** die Anlagemittel (16, 19) der entsprechenden Teile (5, 6) derart angeordnet sind, dass sie bei der Verwendung in der aktiven Befestigungsposition an den Flächenabschnitten des Elements anliegen oder auf diese wirken, wobei die Flächenabschnitte in Längsrichtung der Öffnung an der Seite der Öffnung angeordnet sind, die der Fläche gegenüberliegt, die der zu dem Teil gehörende Vorsprung (10,11) hintergreift.

3. Vorrichtung nach einem der Ansprüche 1 oder 2, **dadurch gekennzeichnet, dass** die Anlagemittel (16, 19) der entsprechenden Teile (5, 6) mit Anlageflächen (17, 20) ausgebildet sind, die zur Anlage an der erstgenannten Fläche (3) angeordnet sind.

4. Vorrichtung nach einem der voranstehenden Ansprüche, **dadurch gekennzeichnet, dass** die verdickten Enden (14) der Vorsprünge jeweils die Form einer Stufe (13) mit Stufenflächen (15) aufweisen, die sich im Wesentlichen senkrecht zu der Längsrichtung der Vorsprünge erstrecken und die verdickten Enden der dazu benachbarten Vorsprungsabschnitte (12) verbinden, und dass die Verriegelungsmittel (21, 23) die Teile (5, 6) bei der Verwendung fest in ihrer aktive Befestigungsposition verriegeln, in der die gestuften Flächen gegen die anderen, die Öffnung umgebenden Flächen gedrückt werden.

5. Vorrichtung nach einem der voranstehenden Ansprüche, **dadurch gekennzeichnet, dass** die Verriegelungsmittel (21, 23) wenigstens ein Eingriffselement (21) eines der Teile aufweisen, das derart angeordnet ist, dass dann, wenn die Teile gemeinsam von der inaktiven Position in ihre aktive Befestigungsposition durch eine Schwenkbewegung verschwenkt werden, das Eingriffselement in einen verriegelnden Eingriff mit einem Eingriffselement (23) des anderen Teils gebracht wird.

6. Vorrichtung nach Anspruch 5, **dadurch gekennzeichnet, dass** die Eingriffsmittel (21, 23) derart angeordnet sind, dass sie in der aktiven Befestigungsposition durch Anlegen von externen Kräften an wenigstens einem der Teile außer Eingriff bringbar sind, wobei die Kräfte wenigstens eines der Teile (6) teilweise deformieren.

7. Vorrichtung nach einem der voranstehenden Ansprüche, **dadurch gekennzeichnet, dass** die Anordnung der Abschnitte der Teile (5, 6), die nicht die Vorsprünge (10, 11) bilden, derart ist, dass in der aktiven Befestigungsposition die Abschnitte sich im Wesentlichen weiter von dem Element (1) weg erstrecken, als die Vorsprünge (10, 11) lang sind, bevorzugt wenigstens drei Mal weiter als die Länge der Vorsprünge, und dass die Verriegelungsmittel (21, 23) jeweils an einem Ende der entsprechenden Teile angeordnet sind, welches von den Vorsprüngen entfernt ist.

8. Verwendung der Vorrichtung nach einem der voranstehenden Ansprüche zum Befestigen von Objekten an Elementen in Form von lastaufnehmenden Elementen (1), beispielsweise Chassis-Rahmenelementen eines Kraftfahrzeugs.

9. Verwendung nach Anspruch 8, wobei die elektronischen Steuereinheiten an einem lastaufnehmenden Element durch Anordnen der elektronischen Steuereinheiten an einem oder beiden der Teile befestigt sind.

10. Verwendung nach Anspruch 9, wobei die elektronischen Steuereinheiten innerhalb des Armaturenbretts des Fahrzeugs befestigt sind.

## Revendications

1. Dispositif pour fixer des unités à commande électroniques à un élément (1) dans un véhicule, cet élément, à des fins de fixation uniquement, comportant un trou (2) dans une surface (3), grâce auquel le dispositif comprend deux parties (5, 6) reliées de façon à pivoter l'une par rapport à l'autre, chacune d'elles comportant une saillie (10, 11) agencée de telle sorte que, lors de l'utilisation, dans une première position de rotation inactive des parties, les saillies soient suffisamment proches l'une de l'autre pour leur permettre d'être insérées ensemble dans le trou, et que, lorsque les saillies sont mutuellement amenées à pivoter dans une position de fixation active, elles soient séparées et saisissent à partir de derrière d'autres surfaces (30) entourant le trou sur le côté du trou opposé à la première surface mentionnée, grâce auquel les unités sont conçues de façon à faire partie de l'une ou des deux parties, ou à être disposées sur l'une ou sur les deux parties, et grâce auquel les saillies comportent des extrémités épaissies (14) avec une section transversale plus grande que les parties saillantes (12) adjacentes à celles-ci, et chaque partie comportant des moyens (16, 19) agencés de telle sorte que, lorsque les parties (5, 6) sont amenées à pivoter de la position inactive vers la position de fixation active, lesdits moyens se déplacent, par rapport à la direction d'insertion des saillies dans ledit trou, dans la direction opposée aux saillies (10, 11) de façon à buter contre la première surface mentionnée (3) entourant le trou sur des côtés opposés du trou, **caractérisé en ce que** l'une des parties (5) comporte une grande surface de portée de charge (24) sur laquelle deux unités de commande électroniques sont conçues pour être fixées, et **en ce que** le dispositif comprend des moyens (21, 23) pour un verrouillage mutuel des deux parties dans ladite position de fixation active, **en ce que** ladite liaison pivotante est formée par le fait que l'une (5) des parties comporte une rainure ouverte (8) avec une section transversale partiellement circulaire et que l'autre partie (6) comporte des parties en forme d'arête (9) qui peuvent être encliquetées dans ladite rainure et qui ont une section transversale correspondant à une section transversale de la rainure, et **en ce que** lesdits moyens de butée (16, 19) destinés à buter contre la première surface mentionnée lors de la poursuite du pivotement appuient contre cette surface et agissent sur les saillies dans la direction vers l'extérieur à partir du trou lorsqu'ils sont poussés de façon à être mutuellement écartés, et leurs extrémités épaissies sont appuyées contre les autres surfaces (30) entourant le trou tandis que les parties saillantes (12) sont appuyées contre les parois intérieures du trou, de telle sorte que, par l'intermédiaire des moyens de verrouillage (21, 23), ils soient ainsi fermement verrouillés dans la position de fixation active.

2. Dispositif selon la revendication 1, **caractérisé en ce que** les moyens de butée (16, 19) des parties respectives (5, 6) sont agencés de telle sorte que, lors de l'utilisation dans ladite position de fixation active, ils butent contre des parties de surfaces dudit élément qui sont situées dans la direction transversale du trou sur le côté du trou opposé aux surfaces que les saillies (10, 11) appartenant à la partie concernée sont conçues pour saisir à partir de derrière, et agissent sur celles-ci.

3. Dispositif selon la revendication 1 ou 2, **caractérisé en ce que** les moyens de butée (16, 19) des parties respectives (5, 6) sont agencés avec des surfaces de butée (17, 20) agencées pour une butée contre la première surface mentionnée (3).

4. Dispositif selon l'une quelconque des revendications précédentes, **caractérisé en ce que** les extrémités épaissies (14) des saillies prennent chacune la forme d'un épaulement (13) avec des surfaces d'épaulement (15) qui s'étendent sensiblement perpendiculairement à la direction longitudinale de la saillie et qui relient les extrémités épaissies aux parties saillantes (12) adjacentes à celles-ci, et **en ce que** les moyens de verrouillage (21, 23) sont agencés de façon à verrouiller fermement les parties (5, 6), lors de l'utilisation, dans une position de fixation active dans laquelle lesdites surfaces d'épaulement sont pressées contre lesdites autres surfaces entourant le trou.

5. Dispositif selon l'une quelconque des revendications précédentes, **caractérisé en ce que** les moyens de verrouillage (21, 23) comprennent au moins un moyen de prise (21) de la partie agencé de telle sorte que, lorsque les parties sont amenées à pivoter mutuellement de la position inactive à la position de fixation active par le mouvement de pivotement, il soit amené en prise de verrouillage avec des moyens de prise (23) de l'autre partie.

6. Dispositif selon la revendication 5, **caractérisé en ce que** lesdits moyens de prise (21, 23) sont agencés de façon à leur permettre d'être mis hors de la prise mutuelle dans ladite position de fixation active par l'application à au moins l'une des parties de forces externes qui déforment partiellement au moins l'une des parties (6).

7. Dispositif selon l'une quelconque des revendications précédentes, **caractérisé en ce que** la configuration de la partie des parties (5, 6) qui ne constitue pas les saillies (10, 11) est telle que, dans ladite position de fixation active, lesdites parties s'étendent sensiblement plus loin à partir dudit élément (1) que les saillies (10, 11) ne sont longues, de préférence sur au moins trois fois la longueur des saillies, et **en ce que** les moyens de verrouillage (21, 23) sont chacun disposés à une extrémité de la partie respective qui est éloignée des saillies.

8. Application du dispositif selon l'une quelconque des revendications précédentes pour la fixation d'objets à des éléments sous la forme d'éléments de portée de charge (1), par exemple des éléments de cadre de châssis, d'un véhicule.

9. Application selon la revendication 8, grâce à laquelle les unités de commande électroniques sont fixées à des éléments de portée de charge d'un véhicule par disposition de celles-ci sur l'une ou sur les deux desdites parties.

10. Application selon la revendication 9, grâce à laquelle des unités de commande électroniques sont fixées à l'intérieur du tableau de bord d'un véhicule.
